# EUROPEAN PATENT SPECIFICATION

(11) **EP 1 204 576 B1**
(45) Date of publication and mention of the grant of the patent: **17.03.2004**
(21) Application number: 00949795.9
(22) Date of filing: 03.08.2000
(51) Int. Cl.: B65G 17/06, G09F 19/02

(54) **BAGGAGE CONVEYOR HAVING PRINTED SLATS**
GEPÄCKFÖRDERER MIT BEDRUCKTEN BANDGLIEDERN
AMELIORATIONS CONCERNANT LES CARROUSELS A BAGAGES

(30) Priority: 03.08.1999 GB 9918200; 30.05.2000 GB 0013008
(43) Date of publication of application: 15.05.2002
(73) Proprietor: Market Ideas Limited, Blackpoole FY6 7NS (GB)
(72) Inventor: Payne, John Michael, Peterborough PE6 8HJ (GB)
(74) Representative: Lipscombe, Martin John
(86) International application number: PCT/GB2000/003021
(87) International publication number: WO 2001/009012

(56) References cited:
- DE-U- 29 823 185
- US-A- 4 979 591

## Description

### Field of invention

This invention relates to a baggage conveyor, in particular to slats used in a baggage conveyor, and to a method of making a baggage conveyor.

### Background of the invention

Baggage conveyors are well known devices used to convey baggage from one place to another, for example they are used in airports to convey the air passengers' baggage, when unloaded from the aircraft, to the baggage reclaim area of the airport where the passengers can watch the baggage being conveyed and remove their own baggage from it.

Sometimes it is desirable to print information on the top, conveying surface of the baggage conveyor, for example to give the baggage conveyer manufacturer's name, or technical information. In addition, the present inventor considers that it would be desirable to use a baggage conveyor as an advertising medium, for example in airports.

Printing on the top surface of a baggage conveyor has been performed previously (see e.g. DE 29 823 185 U), but a problem has arisen in that the printed area is abraded by the continuous flow of baggage being conveyed, and by the action of the slats, which form the top surface of the baggage conveyor and which overlap each other, sliding over each other as they travel around curves in the conveyor system, so that the printed area becomes unreadable or non-acceptable in a relatively short time.

It is an object of the present invention to provide a solution to this problem.

### Summary of the invention

In the first aspect the invention provides a baggage conveyor slat, the slat comprising a substrate layer with information displayed on the uppermost surface of the substrate layer, and wherein at least those portions of the substrate layer displaying information are overlaid by one or more transparent or translucent coating layers such that the displayed information is visible therethrough. Further a method of reducing the friction and wear caused by the slats sliding over each other is provided.

It will be apparent to those skilled in the art that, in order to display information on the uppermost surface of the substrate it is not necessary for print, ink, dye etc. to be applied to the uppermost surface of the substrate: such pigmented materials may, for example, be applied to some other layer (e.g. beneath the uppermost surface), as long as the information displayed is visible at the uppermost surface to a person viewing the slat from above, the object of the invention can be obtained.

The information is conveniently formed on the substrate layer by a printing process (especially silk screen printing), or by use of a preprinted transfer sheet, or by the use of a preprinted woven fabric sheet, to form an information display on the top of the substrate layer, or on the underside of the top transparent layer.

Preferably the transparent or translucent coating layer comprises or substantially consists of polyurethane. Conveniently the substrate layer also comprises polyurethane (although this will normally be an opaque material). Conventional baggage conveyor slats are normally formed from polyvinylchloride (PVC), which results in smooth slats having a low coefficient of friction, allowing adjacent slats to slide readily relative to one another. However PVC is not very scratch resistant - accordingly any logo, text or other information appearing beneath a PVC layer would rapidly become indecipherable. Polyurethane is far more scratch resistant than PVC, but is not an obvious choice of material, generally having a far higher co-efficient of friction, leading to greater abrasion between neighbouring slats and with the static components of the conveyor. The inventor has overcome these difficulties.

Preferably, substantially similar polyurethane formulations may be employed to form both the substrate and the transparent or translucent coating layer, except that the polyurethane used to form the substrate will advantageously comprise an opacifying agent (e.g. TiO₂, or carbon powder).

Conveniently the substrate layer additionally comprises a woven, porous layer (e.g. polyester), to which is applied a printed transfer sheet having information printed thereon. Typically the transfer sheet comprises a cellulosic material, such as paper, which may advantageously printed upon by means of silk screen printing or other printing techniques. The transfer sheet is then placed in contact with the woven porous material (advantageously a polyester material) and the application of heat and pressure transfers the pigmented inks from the transfer sheet to the woven, porous material. Analogous processes are used in the production of printed garments, such as T-shirts, and are well known to those skilled in the art.

The inventor has found that this process transfers the inks only to the raised, upstanding parts of the porous material, leaving the pores clear. In contrast, printing directly onto the porous material tends to block the pores with ink. This is undesirable, as the presence of pores beneficially allows molten polyurethane (from the rest of the substrate) to ingress into the woven porous material, allowing a strong bond to form between the polyurethane and the porous material. In addition, contacting the woven porous material with the molten polyurethane can sometimes trap air bubbles between the two different materials, which is unsightly and can promote delamination: the presence of unblocked pores in the porous material allows the trapped air to escape. (In addition the inventor has found that printing onto a minimal portion of the surface of the woven porous layer can minimise or prevent "bimaterial" effects i.e. the tendency of laminate materials to become distorted due to differences in the physical and/or chemical properties of the materials in the laminate. If desired, the transfer sheet can be applied to both sides of the porous layer, so that both surfaces thereof are treated in the same way and have substantially identical properties.)

Thus, in a preferred embodiment, a layer of molten transparent polyurethane is poured into an open cast mould (this will form the uppermost surface of the finished slat). Next, a pre-printed polyester layer (prepared by the thermal printing process described above) is laid face down on the transparent polyurethane layer. Finally, an opaqu e layer of polyurethane, making up the rest of the substrate layer, is added.

When set, the slat is turned out from the mould. As the mould is of the open-cast type, the thickness of the moulded slat may vary somewhat from casting to casting. In addition, the polyurethane material has a high coefficient of friction, as mentioned above. Both of these problems can be solved by passing the slat through a grinding or sanding process. Conveniently, the underside only of the slat is sanded, using a conventional sanding machine. This allows the thickness of the slat to be carefully regulated. In addition, the surface of the slat is greatly smoothed, reducing the friction between adjacent slats in the assembled conveyor. It is also found that the sanding process facilitates the retention of a lubricating oil, such as a silicone lubricant, which can be sprayed onto the surface of the slat.

In a second aspect, the invention further provides a baggage conveyor, comprising a plurality of baggage conveyor slats in accordance with the first aspect of the invention.

In a third aspect, the invention provides a method of making a baggage conveyor slat in accordance with the first aspect of the invention, the method comprising the steps of forming a substrate layer with information printed thereon, and coating the substrate layer with a layer of transparent or translucent material such that the printed information is visible therethrough. As described above, the substrate preferably comprises a layer of opaque polyurethane and a woven, porous layer on top thereof, the woven porous layer having information printed thereon by means of transfer of pigmented inks or similar from a thermal transfer sheet contacted with the woven porous layer. Preferably the woven porous layer comprises cotton and/or polyester. The substrate is preferably coated with a layer of transparent or translucent polyurethane.

Baggage conveyor slats in accordance with the invention have a further advantage over conveyor slats of the prior art, in that the printed information is applied to the structure of the belt at an earlier stage in production than conventionally. Accordingly the printed information is overlaid by a relatively thick, abrasion resistant material (e.g. polyurethane) which forms an integral part of the structure of the belt, rather than by a thin layer of material such as PVC, which does not form an integral part of the belt and is therefore prone to delamination and is not scratch-resistant.

The invention will now be further described by way of illustrative example, and with reference to the accompanying drawings, in which:
Figure 1 is a plan view of part of a conventional baggage conveyor system showing the arrangement of the slats;
Figure 2 is a diagrammatic side view of a conventional baggage conveyor slat;
Figure 3 is a diagrammatic plan view of a conventional baggage conveyor slat;
Figure 4 is a diagrammatic sectional view of a "three ply" baggage conveyor slat in accordance with the invention;
Figure 5 shows a "bighead" bonding fastener 1 which has a metal threaded shaft welded to a large flat metal head. These fasteners are available in a number of different configurations from Bighead Bonding Fasteners Ltd;
Figure 6 is a diagrammatic sectional view showing a "Bighead" bonding fastener 1 moulded into a conveyor slot 2 and further bonded by the top transparent layer 3;
Figure 7 gives a view of the underside of a conveyor slat 1 showing "Velcro" strips 2 and lubricating strip 3 positioned and fixed in the slot in accordance with the current invention;
Figure 8 is a diagrammatic cross-sectional view of a conveyor slat in accordance with the current invention, showing the substrate 1, a printed fabric sheet 2, a top transparent layer 3, and "Velcro" strips 4 and lubricating strips 5 positioned and fixed into the recesses in the substrate 1. Also shown is the threaded portion 6 of a moulded in "Bighead" bonding fastener.

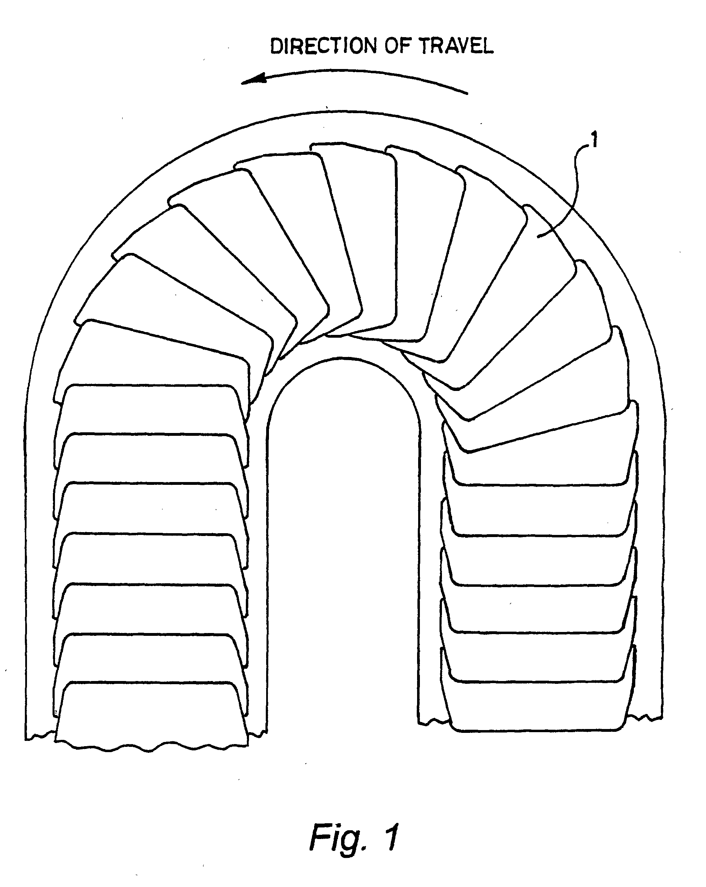

Figure 1 shows diagrammatically a plan view of part of a conventional baggage conveyor, such as is manufactured by a company called Teleflex Gallet of Paris, France, who call this system their Diplodocus overlapping slat conveyor. The conveyor forms a complete endless circuit with a combination of straight and curved sections to form the required configuration. Figure 1 shows a curved section and it can be seen that to traverse around the curves the slats slide over each other. In use it is found that the sliding action of the slats causes severe wear, which is made worse by the ingress of dust and debris between the slats. In addition, abrasion and cutting actions are made to the top surface of the slats by the continual placing of baggage, much of which has sharp metal corners, on the top conveying surface of the slats. This, all in all, makes the top surface of the conveyor slat a very hostile area, and very unsuitable for the placement of printed areas, whether printed directly onto the slats or printed onto separate sheets and fixed onto the top surface for example by adhesive materials.

The current invention gives a means whereby printed areas can be integrated into the structure of the slats so that the printed areas remain largely unaffected by the abrasion and cutting described, and remain legible and acceptable.

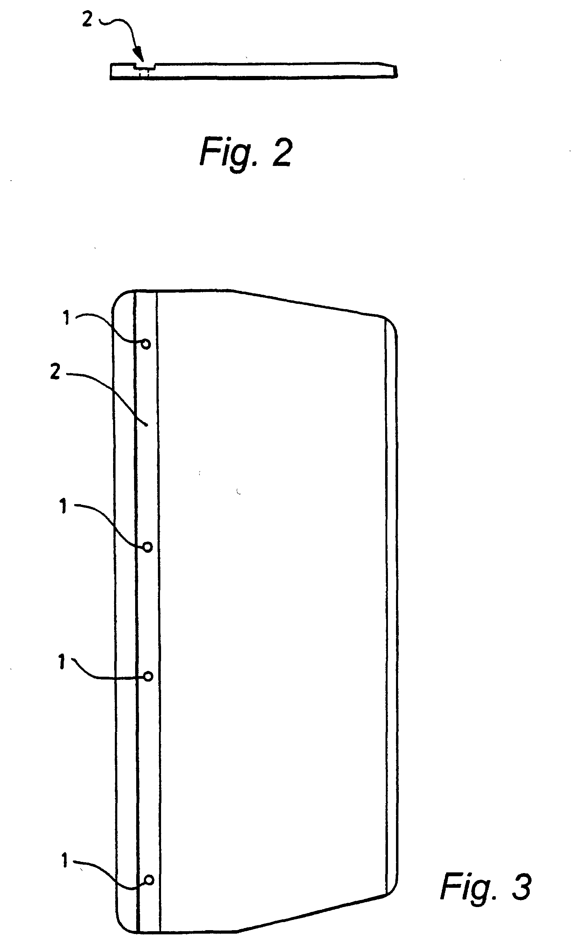

Figure 2 gives a view on the side of a conventional conveyer slat showing the longitudinal recess 2 in which the retaining nuts sit.

Figure 3 gives a plan view of a conventional conveyor slat showing the longitudinal recess 2 and the holes through which the retaining bolts pass. In use it has been found that the retaining nuts often loosen, and because of the sliding action of one slat on another, these nuts are abraded by the slat that slides on them causing them to have sharp edges. In turn these loosened, sharpened nuts ride up above the recess 2 and cause cutting damage and friction to the underside of the slat sliding on them. It is one feature of this invention to prevent this happening.

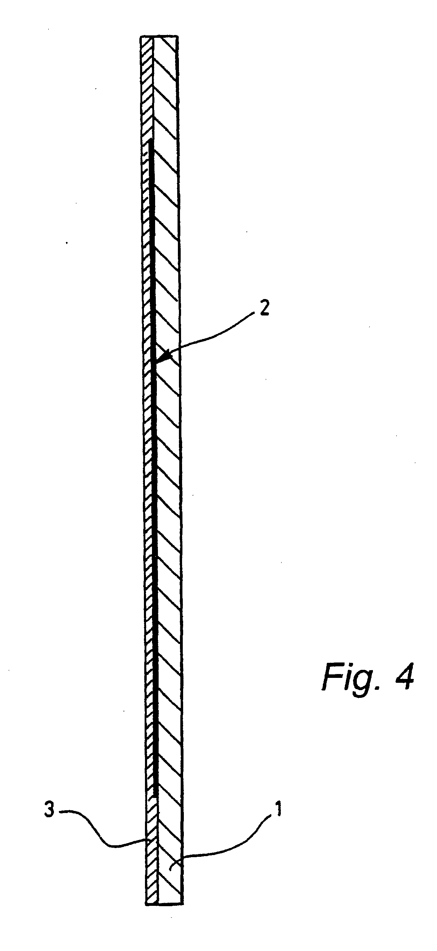

Figure 4 shows the construction of a baggage conveyor slat in accordance with this invention. Conventional conveyor slats are typically made using a moulded or extruded and machined, sheet of PVC. It has been shown that in use the friction between the slats as they slide over each causes considerable abrasion damage to the top and undersides of the slats, this damage is increased by the ingress of grit and debris between the slats. Further damage in the form of cuts and abrasion to the exposed top surfaces of the slats is caused by the baggage being conveyed, the baggage often having sharp metal corners or edges. This damage makes the use of printed messages, for example for advertisements, on the top surface of the slats impracticable by conventional printing methods, as the printed areas rapidly become unreadable or unacceptable in appearance. The current invention uses the following materials and processes to overcome these problems.

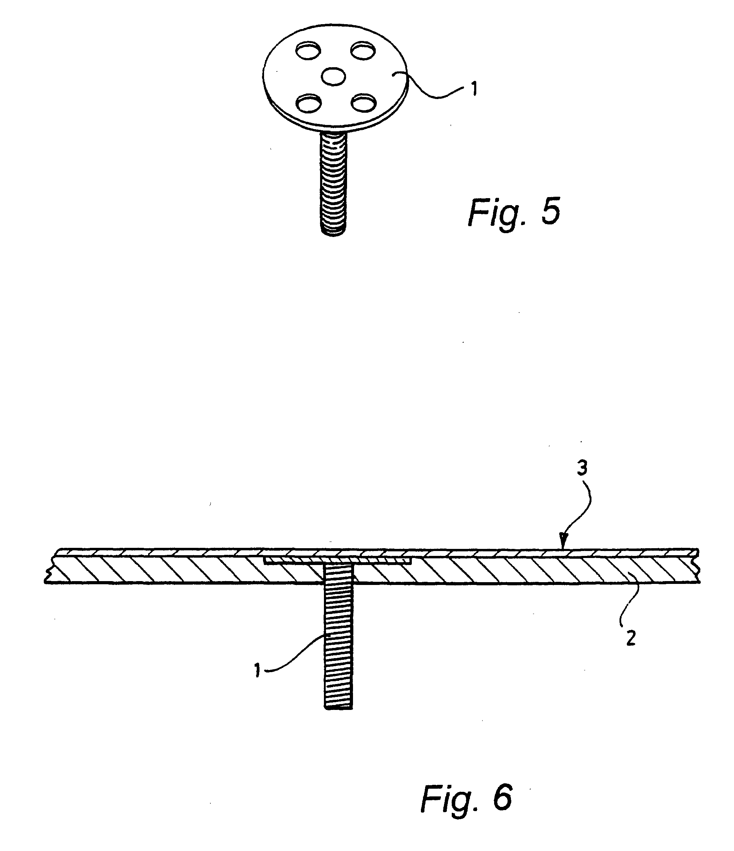

Figure 4 shows a substrate 1 which is made of polyurethane with a hardness typically about 95°A Shore. An insert 2 is provided, consisting of a sheet material, for example woven cotton polyester of the type used in the manufacture of clothes, onto which information or images are printed. Other sheet materials may be used but it has been found that better results are given when a material which allows air to pass easily through it gives the best results as described in the following process descriptions. A layer 3 forms the top surface of the slat, this made from a transparent polyurethane having a hardness around 85°A shore. A process to achieve the subject lamination is described as follows. An open cast mould tool could be used, typically of aluminium, having a cavity, the profile of which is the same as the conventional slat, and a depth at least as deep as the thickness of the conventional slat, and having positioned in the cavity four circular holes through the base of the mould tool, to accommodate the "Bighead" bonding fasteners as shown in Figure 5. The position of these holes would be identical to the bolt holes 1 in Figure 3, and their depth would be such that the top of the heads of the bonding fasteners are level with the top surface of the slat substrate when poured.

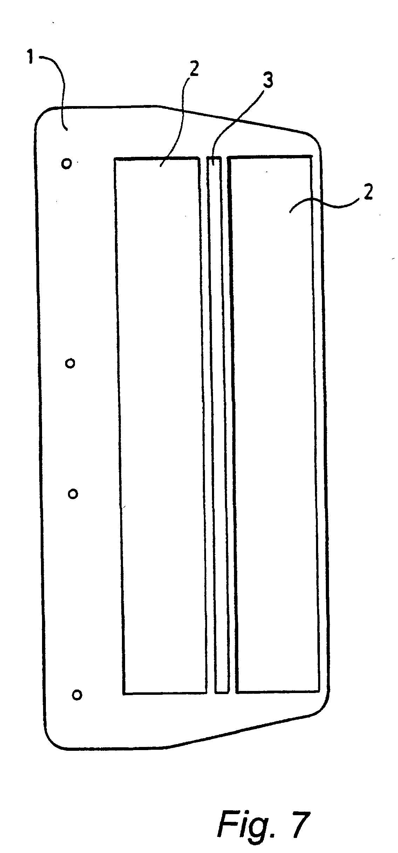

Also positioned and fixed on the bottom surface of the mould would be cores of a size to create the recesses 2 and 3 as shown in Figure 7.

In the use the inside surfaces of the mould cavity would be lined with a proprietary release agent, and the mould heated to and maintained at a temperature usually at 80°C to 100°C. The "Bighead" fasteners would be located in the holes in the mould cavity.

The polyurethane used to cast the substrate 1 (see Figure 4) would for example of a two part heat curing type, and could contain a colouring pigment.

It could be mixed and dispensed by a proprietary machine commonly used in the production of polyurethane mouldings.

A measured amount of mixed polyurethane is dispensed into the mould; the measure being such that the correct thickness of substrate is produced.

The heat of the mould will then begin to cure the polyurethane. Before the polyurethane becomes fully cured a printed fabric sheet 2 (see Figure 4), print side up, is placed on its surface, and the operative ensures that the fabric is fully wetted on its lower surface, the transparent top surface 3 (see Figure 4) is then immediately dispensed onto the substrate and printed fabric and allowed to cure giving a secure bond between substrate, fabric sheet, and top transparent layer. The top transparent layer is also a two part heat cured polyurethane which also serves to bond the "Bighead" fasteners into the laminated slat.

As an alternative, preferred, method, the transparent polyurethane surface can be prepared first, reversing the order of addition of the components.

Conveniently, after curing and cooling, the slat is sanded, on the underside, to smooth the surface and bring the slat to the desired thickness.

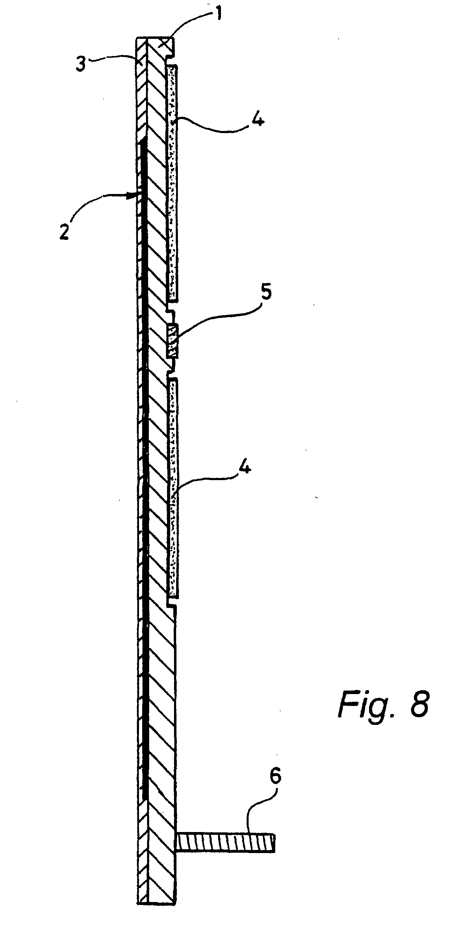

The slat may then optionally be fitted with the "Velcro strips" 4 (see Figure 8). The "Velcro strips" are a well known hook and loop fastener manufactured by Selectus Ltd. In this invention the hook only part of the fastener is used to reduce the friction and wear between the top of one slat and the bottom of the slat in which it is sliding contact. Selectus Ltd were able to supply the hook part of the fastener having removed it from its production line before the loops had been cut to form hooks. It was found that this performed better and would last longer than when the loops are cut. The "Velcro" strips are supplied with self adhesive, or with heat fixing adhesive, and by these means the strips can be located and fixed into the recesses in the slat. As an alternative, the "Velcro" strips could be placed in the mould, from which the recess cores have been removed, so that during moulding the "Velcro" strips become integrated with the underside of the slat. In this case it would be desirable to have shallow recesses in the mould cavity in the positions shown in Figure 7 so that the "Velcro" strips would be proud of the underside of the slat.

The friction and wear between the slat can be further reduced by the application of a small amount of silicone oil to the surface in contact with the "Velcro" strips. This can be done periodically by manual means, or can be done by fixing an absorbent strip of material 5 (see Figure 8) to the recess in the underside of the slat, such that the absorbent strip 5 is in contact with the top surface of the slat on which it slides, the absorbent strip having silicone oil impregnated into it.

## Claims

1. A baggage conveyor slat, the slat comprising a substrate layer with information displayed on the uppermost surface of the substrate layer, and wherein at least those portions of the substrate layer displaying information are overlaid by one or more transparent or translucent coating layers such that the displayed information is visible therethrough, and wherein the substrate layer and/or the transparent or translucent coating layer comprises polyurethane.

2. A slat according to claim 1, wherein the uppermost surface of the substrate comprises a woven, porous material, with an information display formed thereon by the transfer of ink or dye by thermal transfer printing from a transfer sheet.

3. A slat according to claim 2, wherein the woven, porous material comprises cotton and/or polyester.

4. A slat according to any one of the preceding claims, wherein the transparent or translucent coating layer is applied over the entire uppermost surface of the substrate.

5. A baggage conveyor comprising a plurality of slats in accordance with any one of the preceding claims.

6. A method of making a baggage conveyor slat, the method comprising the steps of: forming a substrate layer; forming an information display on the uppermost surface of the substrate; and overlaying the substrate layer with one or more transparent or translucent coating layers, such that the information display is visible therethrough, wherein the substrate layer and/or the transparent or translucent coating layer comprises polyurethane.

7. A method according to claim 6, wherein a thermal transfer printing process is used to print on a woven, porous material, which material forms the uppermost surface of the substrate layer.

8. A method according to claim 6 or 7, wherein a laminate structure is formed in an open cast mould, the laminate structure comprising a layer of opaque polyurethane, a woven, porous material layer having information displayed thereon, and a layer of transparent polyurethane.

9. A method according to any one of claims 6, 7 or 8, further comprising the step of subjecting the slat to a sanding or grinding process.

10. A method according to any one of claims 6-9, further comprising the step of applying a lubricant to the slat.

11. A method according to any one of claims 6-10, performance of which method results in production of a slat in accordance with any one of claims 1-4.

## Patentansprüche

1. Bandglied für einen Gepäckförderer, das eine Substratschicht mit Informationen aufweist, die auf der obersten Fläche der Substratschicht angezeigt sind, und bei dem wenigstens diejenigen Abschnitte der Substratschicht, die die Informationen anzeigen, von einer oder mehreren durchsichtigen oder durchscheinenden Überzugsschichten bedeckt sind, so dass die angezeigten Informationen durch diese hindurch sichtbar sind, und bei dem die Substratschicht und/oder die durchsichtige oder durchscheinende Überzugsschicht Polyurethan aufweist.

2. Bandglied nach Anspruch 1, bei dem die oberste Fläche des Substrats ein gewebtes, poröses Material aufweist, auf dem durch Übertragung von Tinte oder Farbstoff durch Thermotransferdruck von einer Übertragungsfolie eine Informationsanzeige gebildet wird.

3. Bandglied nach Anspruch 2, bei dem das gewebte, poröse Material Baumwolle und/oder Polyester aufweist.

4. Bandglied nach einem der vorigen Ansprüche, bei dem die durchsichtige oder durchscheinende Überzugsschicht über die gesamte oberste Fläche des Substrats aufgebracht ist.

5. Gepäckförderer, der eine Vielzahl von Bandgliedern gemäß einem der vorigen Ansprüche aufweist.

6. Verfahren zum Herstellen eines Bandglieds für einen Gepäckförderer, wobei das Verfahren die Schritte umfasst: Bilden einer Substratschicht; Bilden einer Informationsanzeige auf der obersten Fläche des Substrats; und Bedecken der Substratschicht mit einer oder mehreren durchsichtigen oder durchscheinenden Überzugsschichten, so dass die Informationsanzeige durch diese hindurch sichtbar ist, wobei die Substratschicht und/oder die durchsichtige oder durchscheinende Überzugsschicht Polyurethan aufweist.

7. Verfahren nach Anspruch 6, bei dem ein Thermotransferdruckverfahren verwendet wird, um auf einem gewebten, porösen Material zu drucken, das die oberste Fläche der Substratschicht bildet.

8. Verfahren nach Anspruch 6 oder 7, bei dem eine Laminatstruktur in einer offenen Gussform gebildet wird, wobei die Laminatstruktur eine Schicht aus undurchsichtigem Polyurethan, eine Schicht aus gewebtem, porösem Material, auf der Informationen angezeigt sind, und eine Schicht aus durchsichtigem Polyurethan aufweist.

9. Verfahren nach einem der Ansprüche 6, 7 oder 8, das weiterhin den Schritt umfasst, dass das Bandglied einem Schmirgel- oder Schleifverfahren unterzogen wird.

10. Verfahren nach einem der Ansprüche 6 bis 9, das weiterhin den Schritt umfasst, dass ein Schmiermittel auf das Bandglied aufgebracht wird.

11. Verfahren nach einem der Ansprüche 6 bis 10, bei dem die Durchführung des Verfahrens zur Herstellung eines Bandglieds gemäß einem der Ansprüche 1 bis 4 führt.

## Revendications

1. Plaque de convoyeur de bagages, la plaque comportant une couche de substrat ayant des informations affichées sur la surface la plus haute de la couche de substrat, et dans laquelle au moins les parties de la couche de substrat affichant des informations sont revêtues d'une ou plusieurs couches de revêtement transparent ou translucide de telle sorte que les informations affichées soient visibles à travers celles-ci. et dans laquelle la couche de substrat et/ou la couche de revêtement transparent ou translucide comprennent du polyuréthanne.

2. Plaque selon la revendication 1, dans laquelle la surface la plus haute du substrat comprend un matériau tissé poreux, ayant un affichage d'informations formé sur celle-ci par le transfert d'encre ou de colorant par impression par transfert thermique à partir d'une feuille de transfert.

3. Plaque selon la revendication 2, dans laquelle le matériau tissé poreux comprend du coton et/ou du polyester.

4. Plaque selon l'une quelconque des revendications précédentes, dans laquelle la couche de revêtement transparent ou translucide est appliquée sur toute la surface la plus haute du substrat.

5. Convoyeur de bagages comprenant une pluralité de plaques selon l'une quelconque des revendications précédentes.

6. Procédé de fabrication d'une plaque de convoyeur de bagages, le procédé comprenant les étapes de former une couche de substrat, former un affichage d'informations sur la surface supérieure du substrat, et revêtir la couche de substrat à l'aide d'une ou plusieurs couches de revêtement transparent ou translucide, de sorte que l'affichage d'informations soit visible à travers celles-ci, dans lequel la couche de substrat et/ou la couche de revêtement transparent ou translucide comprend du polyuréthanne.

7. Procédé selon la revendication 6, dans lequel un procédé d'impression par transfert thermique est utilisé pour imprimer sur un matériau tissé poreux, lequel matériau forme la surface supérieure de la couche de substrat.

8. Procédé selon la revendication 6 ou 7, dans lequel une structure stratifiée est formée dans un moule de coulée ouvert, la structure stratifiée comprenant une couche de polyuréthanne opaque, une couche de matériau tissé poreux ayant des informations affichées sur celle-ci, et une couche de polyuréthanne transparent.

9. Procédé selon l'une quelconque des revendications 6, 7 ou 8, comprenant en outre l'étape consistant à soumettre la plaque à un processus de sablage ou de meulage.

10. Procédé selon l'une quelconque des revendications 6 à 9, comprenant en outre l'étape consistant à appliquer un lubrifiant sur la plaque.

11. Procédé selon l'une quelconque des revendications 6 à 10, procédé dont la performance a pour résultat une production de plaque selon l'une quelconque des revendications 1 à 4.
